# EUROPÄISCHE PATENTSCHRIFT

(11) **EP 3 097 213 B1**
(45) Veröffentlichungstag und Bekanntmachung des Hinweises auf die Patenterteilung: **05.12.2018**
(21) Anmeldenummer: 15705210.1
(22) Anmeldetag: 19.01.2015
(51) Int. Cl.: C21B 5/00, C21B 11/02, F27D 21/00, F27D 21/02, C21C 5/52, F27B 1/28, G01S 5/02, G01S 13/89

(54) **VORRICHTUNG ZUR BESTIMMUNG DER TOPOGRAPHIE DER MÖLLEROBERFLÄCHE IN EINEM SCHACHTOFEN**
DEVICE FOR DETERMINING THE TOPOGRAPHY OF THE CHARGE SURFACE IN A SHAFT FURNACE
DISPOSITIF DE DÉTERMINATION DE LA TOPOGRAPHIE DE LA SURFACE DU LIT DE FUSION DANS UN FOUR À CUVE

(30) Priorität: 20.01.2014 DE 102014200928
(43) Veröffentlichungstag der Anmeldung: 30.11.2016
(73) Patentinhaber: TMT - Tapping Measuring Technology Sarl., L-1122 Luxemburg (LU)
(72) Erfinder: MORGENSTERN, Hans-Uwe, 57258 Freudenberg (DE); OSTER, Ulrich, 57234 Wilnsdorf (DE); VIKTOR, Kevin, L-9142 Bürden (LU); STUMPER, Jean-Francois, L-5740 Filsdorf (LU)
(74) Vertreter: advotec.
(86) Internationale Anmeldenummer: PCT/EP2015/050893
(87) Internationale Veröffentlichungsnummer: WO 2015/107195

(56) Entgegenhaltungen:
- EP-A- 0 017 664
- EP-A1- 2 363 694
- EP-A2- 2 202 536
- DE-A1- 4 027 975
- US-A- 4 332 374

## Beschreibung

Die Erfindung betrifft eine Vorrichtung zur Bestimmung der Topographie der Mölleroberfläche in einem Schachtofen mit einer die Mölleroberfläche abtastenden Radareinrichtung mit einer Antenneneinrichtung, die im Bereich eines Ofendeckels angeordnet ist.

Der in einem Schachtofen ablaufende Prozess wird wesentlich durch den Aufbau der im Ofengefäß angeordneten Schichtung aus Koks- und Möllerschichten bestimmt. Zur Ausbildung der Schichten erfolgt eine Beschickung des Ofens mit Koks und Möller durch eine im Ofendeckel angeordnete Beschickungsöffnung, in der eine um die Hochachse des Schachtofens rotierbare Beschickungseinrichtung, die fachterminologisch als "Drehschurre" bezeichnet wird, angeordnet ist, die eine Schüttrampe aufweist, deren Neigung gegenüber der Hochachse verstellbar ist. Die Drehschurre ermöglicht die alternierende Beschickung des Schachtofens mit Koks- und Möllerschichten, wobei möglichst exakt definierte Schichten zur Erzielung eines reproduzierbaren Hochofenprozesses angestrebt werden.

Hierzu ist es notwendig, die Oberflächentopografie der jeweils obersten Schicht vor Aufgabe der nachfolgenden Schicht möglichst exakt zu bestimmen. In diesem Zusammenhang ist es bekannt, Radareinrichtungen einzusetzen, mit denen die Oberflächentopografie erfasst werden kann.

Aus der EP 0 291 751 A1 ist eine Radareinrichtung bekannt, die am Ende einer unterhalb des Ofendeckels die Gefäßwand des Ofens durchdringenden Rohrlanze angeordnet ist und die Erfassung eines Oberflächenprofils des Möllers dadurch ermöglicht, dass die Radareinrichtung mittels der Rohrlanze radial bis zur Mittelachse des Schachtofens bewegt wird. Um weitere radiale Oberflächenprofile des Möllers zu erfassen, wird in der EP 0 291 751 A1 vorgeschlagen, die Radareinrichtung am Ende der Rohrlanze zusätzlich um eine Längsachse und eine Querachse der Rohrlanze schwenkbar anzuordnen, sodass es möglich ist, die Mölleroberfläche auf einem rechtwinkligen "Fadenkreuz" abzutasten.

Abgesehen davon, dass die bekannte Radareinrichtung lediglich die Erfassung von im Wesentlichen linienförmigen radialen Oberflächenprofilen und nicht die Erfassung der Topografie der gesamten Mölleroberfläche ermöglicht, erfordert die bekannte Radareinrichtung zu ihrer Realisierung einen erheblichen apparativen Aufwand, der sowohl die Bereitstellung einer die Gefäßwand des Schachtofens durchdringenden, verschiebbaren Rohrlanze als auch eine zweiachsig verschwenkbare Anordnung der Radareinrichtung am Ende der Rohrlanze erfordert.

Zur Vermeidung eines derartigen apparativen Aufwands ist es aus der WO 2010/144936 A1 bekannt, eine Radareinrichtung stationär in einem Ofendeckel anzuordnen, wobei die Radareinrichtung mit einer in einer Ebene senkrecht zur Hochachse des Schachtofens angeordneten Antenneneinrichtung versehen ist, die aus einer Vielzahl in Matrixanordnung angeordneten Patchantennen zusammengesetzt ist. Diese Patchantennen emittieren Radarstrahlung auf die gesamte Mölleroberfläche, sodass ein Abtastvorgang, wie aus der EP 0 201 751 A1 bekannt, der eine Achsenbewegung der Antenneneinrichtung mit dem entsprechenden apparativen Aufwand erforderlich macht, überflüssig ist. Um eine Beaufschlagung aller Teilbereiche der Mölleroberfläche zu ermöglichen, ist die aus der WO 2010/144936 A1 bekannte Antenneneinrichtung im Ofendeckel auf der Hochachse des Schachtofens angeordnet. Zur Erzielung einer hohen Winkelauflösung und Verringerung von Störeinflüssen der von der Vielzahl von Patchantennen emittierten Radarstrahlung wird über eine komplexe Ansteuerung der Patchantennen eine synthetische Apertur ausgebildet, derart, dass definierte Patchantennen als Sendeantennen und andere definierte Patchantennen als Empfangsantennen betrieben werden.

Weitere Beispiele von Radareinrichtungen werden in der EP0017664 beschrieben. Abgesehen davon, dass die bekannte Radareinrichtung einen erheblichen Steuerungsaufwand erfordert, um die für den Betrieb der Radareinrichtung notwendige synthetische Apertur zu erzeugen, ist die Anordnung der Radareinrichtung im Ofendeckel mit erheblichen Nachteilen verbunden. Zum einen ergibt sich für die Radareinrichtung und insbesondere für die temperaturempfindliche Antenneneinrichtung eine maximal mögliche Temperaturbelastung. Zum anderen ist eine Installation der Radareinrichtung in einen konventionell ausgebildeten Schachtofen, der im Ofendeckel die eingangs beschriebene Drehschurre zur definierten Beschickung der Mölleroberfläche aufweist, nicht möglich, da eine gegenseitige Beeinträchtigung unvermeidbar wäre.
Der vorliegenden Erfindung liegt daher die Aufgabe zugrunde, eine Vorrichtung der eingangs genannten Art vorzuschlagen, die eine genaue Erfassung der Topografie der Mölleroberfläche ermöglicht und deren Installation sowie Betrieb mit möglichst geringem Aufwand möglich ist. Zur Lösung dieser Aufgabe weist die erfindungsgemäße Vorrichtung die Merkmale des Anspruchs 1 auf.
Erfindungsgemäß ist die Antenneneinrichtung auf einer gegenüber einer Hochachse des Schachtofens unter einem Neigungswinkel α geneigten Rotationsachse angeordnet und mittels einer Antriebseinrichtung um die Rotationsachse rotierbar, derart, dass ein durch die emittierte Radarstrahlung der Antenneneinrichtung gebildeter Radarfächer längs einer Profillinie p auf die Mölleroberfläche auftrifft und bei Rotation der Antenneneinrichtung die Mölleroberfläche überstreicht.

Die erfindungsgemäße Vorrichtung ermöglicht somit zum einen aufgrund ihrer Anordnung auf der gegenüber der Hochachse des Schachtofens geneigten Rotationsachse eine Anordnung, die nicht mit einer im Ofendeckel angeordneten, vorzugsweise als Drehschurre ausgebildeten Beschickungseinrichtung kollidiert. Zum anderen ergibt sich aufgrund der Anordnung der Antenneneinrichtung auf der gegenüber der Hochachse geneigte Rotationsachse eine grundsätzlich gegenüber einer Anordnung auf der Hochachse verringerte Temperaturbelastung für die Antenneneinrichtung. Weiterhin ermöglicht es die erfindungsgemäße Überlagerung eines von der Antenneneinrichtung emittierten Radarfächers mit einer Rotationsbewegung der Antenneneinrichtung, dass die Antenneneinrichtung nicht zwangsläufig mit einer Ansteuerung zur Ausbildung einer synthetischen Apertur betrieben werden muss, um die gewünschte hohe Auflösung der Oberfläche zu erreichen. Vielmehr ist die erreichbare Auflösung unter anderem von der Impulsrate der Radarstrahlung und der Drehgeschwindigkeit abhängig, mit der die Antenneneinrichtung um die Rotationsachse rotiert.

Insgesamt ermöglicht also die erfindungsgemäße Vorrichtung eine Erfassung der Mölleroberfläche mit hoher Auflösung bei vergleichsweise geringem Steuerungsaufwand und apparativem Aufwand, da lediglich die Ausbildung einer Rotationsachse für die Rotation der Antenneneinrichtung notwendig ist.

Hiermit ist es auch möglich, die erfindungsgemäße Vorrichtung nachträglich in einem konventionell ausgebildeten Schachtofen zu integrieren, der in seinem Ofendeckel eine vorzugsweise als Drehschurre ausgebildete Beschickungseinrichtung aufweist.

In einer bevorzugten Ausführungsform beträgt der Neigungswinkel α der Rotationsachse gegenüber der Hochachse zwischen 20° und 60°.

Eine besonders einfache Ausgestaltung der Vorrichtung wird möglich, wenn die Antenneneinrichtung in einer senkrecht zur Rotationsachse orientierten Antennenebene angeordnet ist.

Wenn es insbesondere wegen unzureichender Qualität oder eines zu geringen Öffnungswinkels der zum Einsatz kommenden Antenneneinrichtung sich als nicht ausreichend erweisen sollte, mit nur einer Antenne die gesamte Schüttgut- bzw. Mölleroberfläche zu erfassen, ist es auch möglich, die Antenneneinrichtung modular aus zumindest zwei Antennenmodulen aufzubauen, die durch Überlagerung ihrer Strahlöffnungswinkel die Ausbildung eines Radarfächers mit der gewünschten Breite ermöglichen.

Die Verwendung einer Mehrzahl von Antennenmodulen für die Antenneneinrichtung ermöglicht auch eine Verringerung des zur Erfassung der gesamten Oberfläche notwendigen Rotationswinkels.

Die Antennenmodule können in einer gemeinsamen Antennenebene angeordnet sein oder auch in verschiedenen, unter einem Winkel zueinander geneigten Antennenebenen.

Insbesondere können die in verschiedenen, unter einem Winkel zueinander geneigten Antennenebenen, in denen die Antennenmodule angeordnet sind, unter unterschiedlichen Winkeln zur Rotationsachse angeordnet sein.

Nachfolgend werden bevorzugte Ausführungsformen der Vorrichtung anhand der Zeichnungen näher erläutert. Es zeigen:
- **Fig. 1**: einen Schachtofen in Schnittdarstellung mit einer im Oberteil eines Ofengefäßes in einer Gefäßwand angeordneten Radareinrichtung in einer ersten Ausführungsform;
- **Fig. 2**: die in **Fig. 1** dargestellte Radareinrichtung in einer Schnittdarstellung gemäß Schnittlinienverlauf II-II in **Fig. 1**;
- **Fig. 3**: eine alternative Ausführungsform der in **Fig. 2** dargestellten Radareinrichtung;
- **Fig. 4**: eine weitere Ausführungsform einer in der Gefäßwand angeordneten Radareinrichtung;
- **Fig. 5**: eine Schnittdarstellung gemäß Schnittlinienverlauf V-V der in **Fig. 4** dargestellten Radareinrichtung;
- **Fig. 6**: eine alternative Ausführungsform der in **Fig. 5** dargestellten Radareinrichtung.

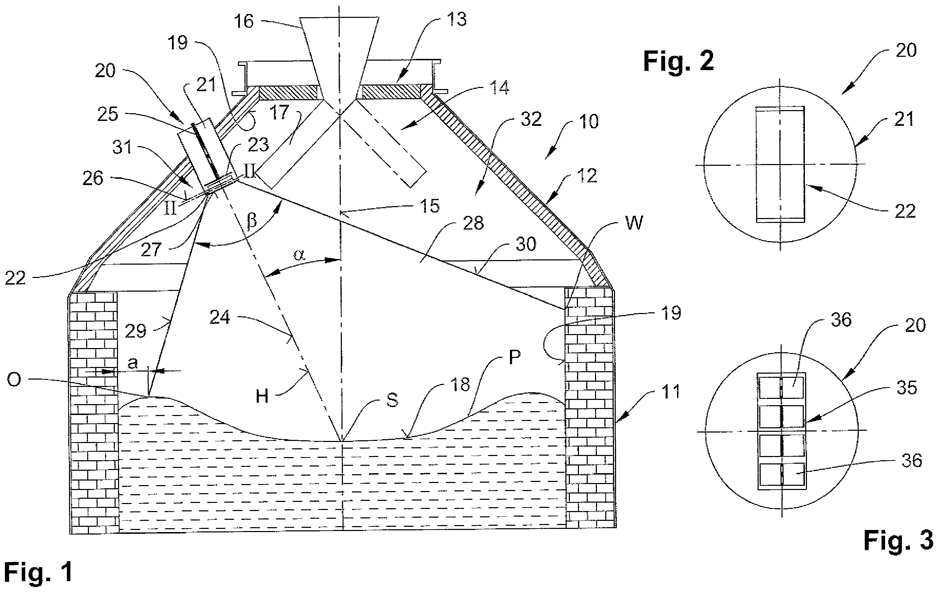

**Fig. 1** zeigt einen Schachtofen 10, der im Wesentlichen aus einem Ofenunterteil 11, einem Ofenoberteil 12 und einem Ofendeckel 13 besteht, in den eine, hier als Drehschurre 14 ausgebildete Beschickungseinrichtung integriert ist, die um eine Hochachse 15 verschwenkbar ist, sodass eine an eine Trichteröffnung 16 der Drehschurre 14 anschließende Schüttrampe 17, die gegenüber der Hochachse 15 neigungsverstellbar ist, definiert positionierbar ist.

Die Drehschurre 14 dient zur alternierenden Beschickung des Schachtofens 10 mit in **Fig. 1** im Einzelnen nicht näher dargestellten Koks- und Möllerschichten, wobei möglichst exakt definierte Schichten zur Erzielung eines reproduzierbaren Hochofenprozesses angestrebt werden. Hierzu ist es notwendig, die Oberflächentopografie der obersten Schicht vor Aufgabe der nachfolgenden Schicht möglichst exakt zu bestimmen.

Zur Erfassung einer in **Fig. 1** dargestellten Mölleroberfläche 18 ist im Bereich des Ofendeckels 13 oberhalb der Mölleroberfläche 18 in einer Ofenwand 19 des Ofenoberteils 12 eine Radareinrichtung 20 angeordnet, wobei ein Gehäuse 21 der Radareinrichtung 20 die Ofenwand 19 durchdringt. Innerhalb des Gehäuses 21 befindet sich eine Antenneneinrichtung 22, die auf einem Antennenträger 23 angeordnet ist, der um eine Rotationsachse 24 drehbar, und mit einer hier nicht näher dargestellten Antriebseinrichtung über eine Trägerwelle 25 antreibbar ist.

Die Antenneneinrichtung 22, welche auch in **Fig. 2** dargestellt ist, befindet sich in einer hier senkrecht zur Rotationsachse 24 angeordneten Antennenebene 26 und ist durch eine für Radarstrahlung durchlässige Schutzscheibe 27 gegenüber der Ofenatmosphäre abgeschirmt. In dem dargestellten Ausführungsbeispiel ist die Rotationsachse 24 unter einem Winkel α von etwa 30 Grad gegenüber der Hochachse 15 geneigt und schneidet die Hochachse 15 etwa in einem Schnittpunkt S der Hochachse 15 mit der Mölleroberfläche 18. Die Antenneneinrichtung 22 ist so ausgebildet, dass eine Hauptachsenrichtung H der Radarstrahlung im Wesentlichen mit der Rotationsachse 24 zusammenfällt und ein Strahlöffnungswinkel β der Antenneneinrichtung 22 ausreichend groß ist, um einen Radarfächer 28 auszubilden, der die Beaufschlagung der Mölleroberfläche 18 längs einer Profillinie p zwischen der Hochachse 15 und der Ofenwand 19 des Schachtofens 10 ermöglicht. Im vorliegenden Fall ergibt sich eine Ausbildung des Radarfächers 28 mit Randstrahlen 29, 30 wobei der Randstrahl 29 in einer Installationshälfte 31 des Schachtofens 10, in der sich die Radareinrichtung 20 befindet, mit Abstand a zur Ofenwand 19 die Mölleroberfläche 18 in einem Oberflächenpunkt O schneidet und der Randstrahl 30 auf einer der Installationshälfte 31 gegenüberliegenden Ofenhälfte 32 die Ofenwand 19 in einem Wandpunkt W schneidet, sodass sich bei dem dargestellten Ausführungsbeispiel die von dem Radarfächer 28 beaufschlagte Profillinie p der Mölleroberfläche 18 vom Oberflächenpunkt O bis zur Ofenwand 19 erstreckt. Bei einer Drehung der Antenneneinrichtung 22 um die Rotationsachse 24 um 360° wird von dem Radarfächer 28 die gesamte Mölleroberfläche 18 überstrichen.

**Fig. 3** zeigt eine Antenneneinrichtung 35, die aus mehreren in derselben Antennenebene 26 angeordneten Antennenmodulen 36 besteht.

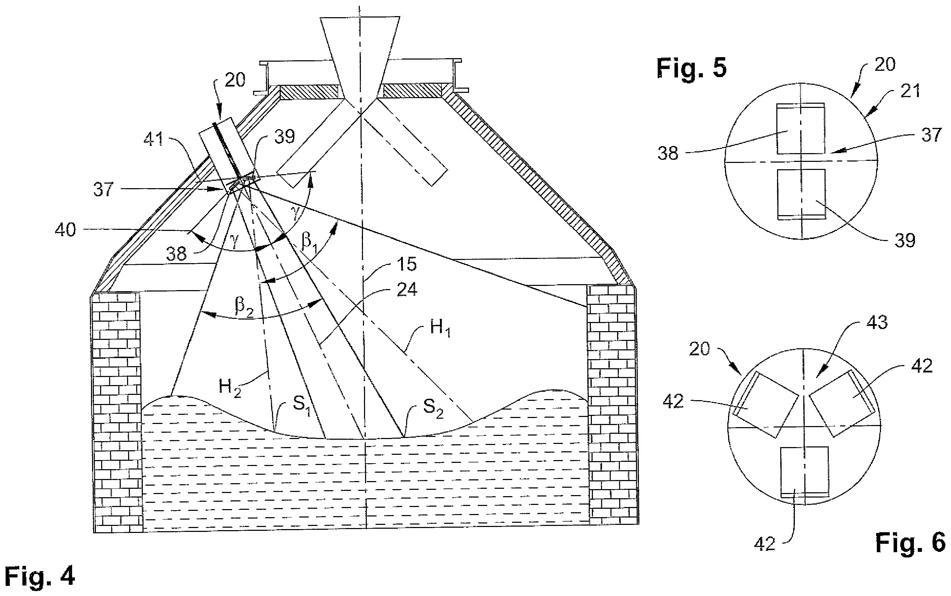

**Fig. 4** zeigt die Radareinrichtung 20 mit einer Antenneneinrichtung 37, die zwei Antennenmodule 38, 39 aufweist, welche jeweils in einer Antennenebene 40, 41 angeordnet sind. Die Antennenebenen 40, 41 sind jeweils unter einem Winkel γ zur Rotationsachse 24 geneigt, sodass die Hauptachsenrichtungen H1, H2 der Antennenmodule 38, 39 die Mölleroberfläche 18 in unterschiedlichen Schnittpunkten S1 und S2 schneiden. Beide Antennenmodule 38, 39 weisen jeweils einen Öffnungswinkel β1 und β2 auf, die im vorliegenden Fall übereinstimmen. Beide Öffnungswinkel β1, β2 der Antennenmodule 38, 39 bilden in ihrer Überlagerung einen Radarfächer 28 aus, der mit dem in **Fig. 1** dargestellten Radarfächer 28 übereinstimmt.

Abweichend von der Darstellung in **Fig. 4** ist es natürlich auch möglich, dass die Antennenebenen 40 der Antennenmodule 38, 39 unterschiedliche Winkel γ gegenüber der Rotationsachse 24 aufweisen. Auch ist es möglich, wie in **Fig. 6** dargestellt, dass drei oder mehr Antennenmodule 42, 43, 44 zusammen eine Antenneneinrichtung 45 ausbilden, wobei die Antennenebenen, in denen sich die Antennenmodule 42 bis 44 befinden einen übereinstimmenden Winkel gegenüber der Rotationsachse 24 oder auch unterschiedliche Winkel gegenüber der Rotationsachse 24 aufweisen können.

Unabhängig von den vorstehend anhand der **Fig. 1** bis **6** erläuterten Antenneneinrichtungen 22, 35, 37, 45 der Radareinrichtung 20 wird deutlich, dass die erfindungsgemäß ausgebildete Radareinrichtung eine Anordnung beziehungsweise Integration in einen Schachtofen 10 ermöglicht, ohne dass die Gefahr einer Kollision mit einer, hier als Drehschurre 14 ausgebildeten, im Ofendeckel 13 angeordneten Beschickungseinrichtung besteht.

## Patentansprüche

1. Vorrichtung zur Bestimmung der Topographie der Mölleroberfläche in einem Schachtofen (10) mit einer die Mölleroberfläche (18) abtastenden Radareinrichtung (20) mit einer Antenneneinrichtung (22, 35, 37, 43), die im Bereich eines Ofendeckels (13) angeordnet ist,
**dadurch gekennzeichnet,**
**dass** die Antenneneinrichtung auf einer gegenüber einer Hochachse (15) des Schachtofens unter einem Neigungswinkel α geneigten Rotationsachse (24) angeordnet ist und mittels einer Antriebseinrichtung um die Rotationsachse rotierbar ist, derart, dass ein durch die emittierte Radarstrahlung der Antenneneinrichtung gebildeter Radarfächer (28) längs einer Profillinie p auf die Mölleroberfläche auftrifft und bei Rotation der Antenneneinrichtung die Mölleroberfläche überstreicht.

2. Vorrichtung nach Anspruch 1,
**dadurch gekennzeichnet,**
**dass** der Neigungswinkel α der Rotationsachse (24) gegenüber der Hochachse (15) zwischen 20° und 60° beträgt.

3. Vorrichtung nach Anspruch 1 oder 2,
**dadurch gekennzeichnet,**
**dass** die Antenneneinrichtung (22) in einer senkrecht zur Rotationsachse (24) orientierten Antennenebene (26) angeordnet ist.

4. Vorrichtung nach einem der vorangehenden Ansprüche,
**dadurch gekennzeichnet,**
**dass** die Antenneneinrichtung (35, 37, 43) zumindest zwei Antennenmodule (36, 38, 39, 42) aufweist.

5. Vorrichtung nach Anspruch 4,
**dadurch gekennzeichnet,**
**dass** die Antennenmodule (36) in einer gemeinsamen Antennenebene (26) angeordnet sind.

6. Vorrichtung nach Anspruch 4,
**dadurch gekennzeichnet,**
**dass** die Antennenmodule (38, 39, 42) in verschiedenen, unter einem Winkel γ zur Rotationsachse (24) geneigten Antennenebenen (40, 41) angeordnet sind.

7. Vorrichtung nach Anspruch 6,
**dadurch gekennzeichnet,**
**dass** die Antennenebenen unter unterschiedlichen Winkeln zur Rotationsachse (24) angeordnet sind.

## Claims

1. A device for determining the topography of the burden surface in a shaft furnace (10), the device comprising a radar device (20) that scans the burden surface (18) and has an antenna device (22, 35, 37, 43) arranged in the area of a furnace cover (13),
**characterized in that**
the antenna device is arranged on an axis of rotation (24) inclined in relation to a vertical axis (15) of the shaft furnace at an angle of inclination α and is rotatable about the axis of rotation by means of a drive device in such a manner that a radar fan beam (28) formed by the emitted radar radiation of the antenna device is incident upon the burden surface along a profile line p and sweeps across the burden surface as the antenna device rotates.

2. The device according to claim 1,
**characterized in that**
the angle of inclination α of the axis of rotation (24) is between 20° and 60° in relation to the vertical axis (15).

3. The device according to claim 1 or 2,
**characterized in that**
the antenna device (22) is arranged in an antenna plane (26) oriented vertically to the axis of rotation (24).

4. The device according to any one of the preceding claims,
**characterized in that**
the antenna device (35, 37, 43) has at least two antenna modules (36, 38, 39, 42).

5. The device according to claim 4,
**characterized in that**
the antenna modules (36) are arranged in a shared antenna plane (26).

6. The device according to claim 4,
**characterized in that**
the antenna modules (38, 39, 42) are arranged in different antenna planes (40, 41) inclined at an angle γ to the axis of rotation (24).

7. The device according to claim 6,
**characterized in that**
the antenna planes are arranged at different angles to the axis of rotation (24).

## Revendications

1. Dispositif de détermination de la topographie de la surface (18) du lit de fusion dans un four à cuve (10) avec un dispositif radar (20) balayant la surface (18) du lit de fusion avec un dispositif d'antenne (22, 35, 37, 43) disposé dans la zone du couvercle de four (13),
**caractérisé en ce que**
le dispositif d'antenne est disposé sur un axe de rotation (24) incliné selon un angle d'inclinaison α par rapport à un axe vertical (15) du four à cuve et peut être tourné autour de l'axe de rotation au moyen d'un dispositif d'entraînement, de telle manière qu'un éventail radar (28), formé par le rayonnement radar émis par le dispositif d'antenne, est incident sur la surface du lit de fusion le long d'une ligne de profil p et balaye la surface du lit de fusion lors de la rotation du dispositif d'antenne.

2. Dispositif selon la revendication 1,
**caractérisé en ce que**
l'angle d'inclinaison α de l'axe de rotation (24) fait d'entre 20° et 60° par rapport à l'axe vertical (15).

3. Dispositif selon l'une quelconque des revendications 1 ou 2,
**caractérisé en ce que**
le dispositif d'antenne (22) est disposé dans un plan d'antenne (26) orienté perpendiculairement vers l'axe de rotation (24).

4. Dispositif selon l'une quelconque des revendications précédentes,
**caractérisé en ce que**
le dispositif d'antenne (35, 37, 43) comprend au moins deux modules d'antenne (36, 38, 39, 42).

5. Dispositif selon la revendication 4,
**caractérisé en ce que**
les modules d'antenne (36) sont disposés dans un plan d'antenne (26) commun.

6. Dispositif selon la revendication 4,
**caractérisé en ce que**
les modules d'antenne (38, 39, 42) sont disposés dans des plans d'antenne (40, 41) différents inclinés selon un angle γ vers l'axe de rotation (24).

7. Dispositif selon la revendication 6,
**caractérisé en ce que**
les plans d'antenne sont disposés selon des angles différents vers l'axe de rotation (24).
